# EUROPEAN PATENT APPLICATION

(11) **EP 1 748 375 A1**
(43) Date of publication of application: **31.01.2007**
(21) Application number: 06118128.5
(22) Date of filing: 28.07.2006
(51) Int. Cl.: G06F 21/00

(54) **Traffic control software lock and method**

(30) Priority: 29.07.2005 US 703996 P
(71) Applicant: Siemens Energy & Automation, Inc., Alpharetta, GA 30005-4437 (US)
(72) Inventor: Miller, David Dodd, Austin, TX 78759 (US)
(74) Representative: Neill, Andrew Peter

(57) **Abstract**

A method and system deploys software modules for on-street traffic control computers by selectively unlocking preloaded modules of the software. A host firm builds or acquires the on-street traffic control computers and preloads locked versions of software modules provided by a software partner firm. When a customer wishes to purchase a license to run a particular module, the customer provides the host firm with identifiers for the particular computer and the particular software module, and the host firm responds with a license number that is useable to unlock the module. The customer makes a payment to the host firm, and the host firm makes a slightly smaller payment to the software partner. The host firm is thereby motivated to accommodate the customer and the software partner.

## Description

### Cross Reference to Related Applications

This application claims the benefit of U.S. Provisional Application Serial No. 60/703,996 entitled "Traffic Control Lock and Method," filed on July 29, 2005, the contents of which are hereby incorporated by reference herein in their entirety.

### Field of the Invention

The present invention relates generally to the deployment of software in on -street traffic control computers, and more particularly, to techniques and systems for selectively activating software modules installed in on-street traffic control computers.

### Background of the Invention

Traffic controllers and traffic control computers, such as the Siemens ATCnx on-street computer, have become extremely common in many developed areas. Most controlled roadway intersections utilize traffic control computers, which are often housed in weatherproof enclosures adjacent to the road. Historically, traffic controllers were used to control traffic signals at intersections. As technology improved and the controllers became more easily programmable, those computers have been linked together and have been used to intelligently control the intersections, coordinating with nearby intersections and responding to inputs from traffic monitoring devices such as cameras and other sensors.

Traffic control computers are typically purchased by customers such as municipalities or other government entities, from a manufacturer that builds or procures the hardware. Traffic control software, such as the SafeSuite traffic control software distributed by Siemens Corporation, may include several optional modules for performing specialized functions. The traffic control computer manufacturer typically develops the software, and pre-installs the particular software modules specified by the customer. The computer is then installed and placed in use with the pre-installed software ready to run. During the life of the controller, updated versions of the software may be installed, typically by the manufacturer.

Several barriers exist to the development of additional software for on-street traffic control computers by third-party software firms. The software must be fully compatible with the software already installed on the traffic control computers, or must perform the same functionality with often-proprietary signal equipment. Such software is therefore difficult for a third party to write, debug and test. It is furthermore difficult for a third-party firm to market software directly to traffic control customers, which are often public entities. Traffic control software is often chosen, for example, through the political processes of a municipality. A typical software developer is ill-equipped to participate in such processes. Additionally, installation and maintenance of software in a traffic control environment is expensive for a third party software firm, because such a firm does not have expertise in the overall traffic control system.

Importantly, there is presently little motivation for a traffic control computer firm ("host firm") to design a traffic control computer to facilitate third party software developer participation. The host firm receives little or no monetary benefit from the installation of third part software on its machines.

Traffic control computer software is distributed in a manner analogous to most personal computer software, wherein the operating system and some productivity software suites are pre-installed by the computer manufacturer according to the customers' specifications. The software is fully operational and ready to use when the personal computer is delivered to the customer. License fees for using the software on the computer are included in the purchase price of the computer.

There is a perceived security advantage to distributing software in a pre-installed form. Software may be made difficult to copy from one machine to another, thereby making breach of a single-machine license difficult. Such protection is not readily available to a third party software developer that must install the software on machines in the field.

Historically, the transportation and traffic control software industries have been plagued by the theft of intellectual property. Especially hard-hit have been small, private software developers with innovative products, which have been easily copied. For example, the executable code licensed to a public agency is easily loaded and run without authorization on multiple computers without collection of royalties due. A parallel problem arose in the early days of the personal computer, where one legal copy of a word processor software product might be purchased, then installed illegally on a number of PCs without the knowledge of the software vendor.

Recent legal developments, including the passage of the Digital Millennium Copyright Act and its enforcement by the courts, have greatly strengthened copyright protection in the United States. The federal courts have been willing to impose strong civil penalties, and even criminal sanctions, on programmers who intentionally "break" program locks to infringe a copyright on the locked software.

There is presently a need to provide a method and system that facilitates the participation of third party software developers in the development of software for traffic control computers, while overcoming the above problems. To the inventor's knowledge, there is currently no such technique available.

### Summary of the Invention

In order to address the above-described problem, a method is provided for deploying software in a traffic control computer for use by a customer. The method includes the steps of receiving from a software partner firm at least one software module, preloading a locked instance of the at least one software module in the traffic control computer, receiving from the customer a purchase order including a traffic control computer identifier and a software module identifier identifying a selected module of the at least one software modules, receiving from the customer a customer software license payment, generating a license number using the traffic control computer identifier and the software module identifier, the license number being useable to unlock the selected software module, transmitting the license number to the customer; and transmitting to the software partner firm a partner firm software license payment, the partner firm software license payment being less than the customer software license payment.

A difference between the partner firm software license payment and the customer software license payment may be less than 10% of the partner firm software license payment; or in another embodiment, less than 5%.

The traffic control computer identifier may be a media access control (MAC) address of the traffic control computer. The software module identifier may be a part number of the selected software module, or may be a serial number of the particular instance of the selected software module preloaded on the traffic control computer.

The step of generating a license number using the traffic control computer identifier and the software module identifier, may further include using the traffic control computer identifier and the software module identifier as computational seeds. The step of transmitting the license number to the customer may further comprise emailing the license number to the customer.

One or more software modules may perform one or more traffic control functions, and one or more modules may perform one or more functions other than a traffic control function.

Another embodiment of the invention is a host firm system for unlocking preloaded software modules in a traffic control computer under control of a customer. The system includes a software partner firm interface for receiving software modules from a software partner firm, a customer interface for receiving a purchase order including an identifier of the traffic control computer and a software module identifier identifying a selected module of software modules preloaded on the traffic control computer, a funds receiving utility for receiving a customer software license payment from the customer, a license number generator for generating a software license number using the traffic control computer identifier and the software module identifier, the license number being useable to unlock the selected software module, and a funds transmitting utility for transmitting to the software partner firm a partner firm software license payment, the partner firm software license payment being less than the customer software license payment.

In another embodiment of the invention, a method is provided for deploying software in a computer for use by a customer. The method includes the steps of receiving from a software partner firm at least one software module, preloading a locked instance of the at least one software module in the computer, receiving from the customer a purchase order including a computer identifier and a software module identifier identifying a selected module of the at least one software modules, receiving from the customer a customer software license payment; generating a license number using the computer identifier and the software module identifier, the license number being useable to unlock the selected software module, transmitting the license number to the customer, and transmitting to the software partner firm a partner firm software license payment.

In that method, the partner firm software license payment may be less than the customer software license payment. In that case, a difference between the partner firm software license payment and the customer software license payment may be less than 10% of the partner firm software license payment, or may be less than 5%.

The computer in that method may be an on-street traffic control computer, in which case one or more software modules may perform at least one traffic control function, and one or more modules may perform at least one function other than a traffic control function.

### Brief Description of the Drawings

FIG. 1 is a block diagram showing a system according to one embodiment of the invention.

FIG. 2 is a schematic diagram showing a system according to one embodiment of the invention.

FIGS. 3A & 3B are flow charts showing a method according to one embodiment of the invention.

### Description of the Invention

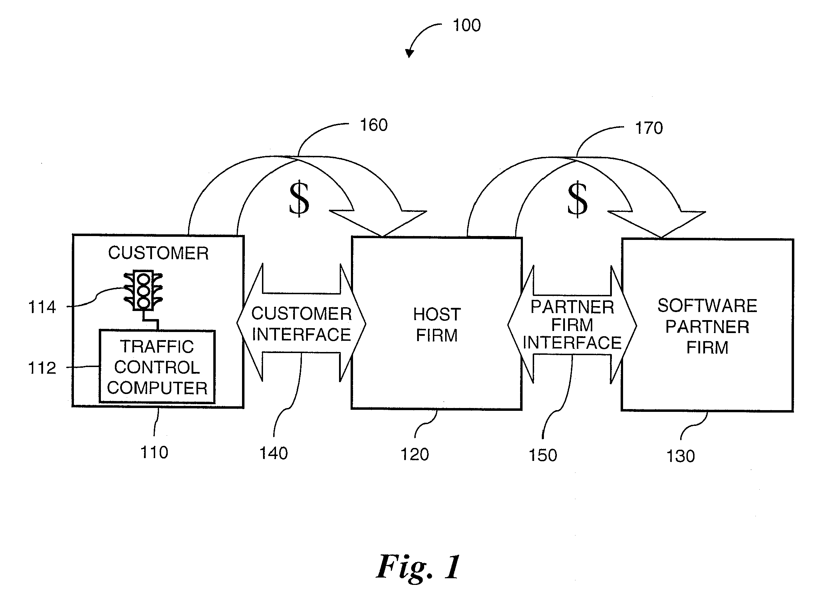

The present invention is practiced in an environment such as that shown in the block diagram 100 of FIG. 1. The diagram 100 depicts a general organizational structure for providing and installing traffic control software.

The structure includes a customer 110 such as a governmental entity that utilizes traffic control systems, a host firm 120 responsible for the marketing and distribution of traffic control systems, and a software partner firm 130 that develops software modules for use in the traffic control systems. Funds transfer utilities 160, 170 link the entities 110, 120, 130 as additionally described below.

The host firm 120 may design and build the traffic control computers in-house, or may specify them for manufacture by subcontractors. The host firm may further offer services such as installation, training, maintenance and set-up of traffic control computers 112 for the customer 110.

The customer 110 may be a government entity such as a municipality. The customer is responsible for smooth and safe traffic flow on the roadway infrastructure, and purchases traffic control systems including traffic control computers 112 controlling traffic signals 114 to promote that objective. A customer interface 140 links the customer and host firm 120 for exchange of information as described below.

The software partner firm 130 develops and tests software modules for execution on the traffic control computer. The software modules may be specified completely by the host firm, or may be generated, at least in part, based on comments and requests made directly by the customer 110. The developed software modules are transmitted by the partner firm to the host firm via a partner firm interface 150. The interface may be electronic, or may simply be an appropriate physical medium such as an optical disk.

The developed software modules may be directly related to traffic control. For example, a software module may control a traffic signal according to the time of day, day of the week, etc. In another example, a software module may interface with other traffic control computers or with a central control system to regulate traffic in a specific area, such as a municipal street grid.

Software modules may interface with external traffic sensors, interpret data from those sensors, and implement traffic control decisions based on the interpretations. For example, a software module may interpret images from cameras monitoring an intersection, and regulate traffic signals controlling that intersection based on traffic patterns derived from the camera images. A software module may detect traffic violations such as speeding or traffic signal violations, using data from cameras, radar sensors, etc. That software module may further electronically issue traffic tickets using camera images or other means to identify vehicles. In another example, a software module may analyze an audio input to determine the presence of emergency vehicle sirens, and adjust the control of traffic signals accordingly.

Because of the increased number of on-street traffic control computers now installed in populated areas, other uses of those computers are now being proposed by customers, host firms and software partner firms. For example, it has been proposed to connect radiation sensors to a traffic control system via software modules that interpret input from those sensors and relay that information to an emergency management system. In that way, radiation clouds from a reactor accident or enemy bomb may be detected and tracked.

It has further been proposed to utilize the traffic control computer network to distribute WiFi access points in a municipality, providing continuous wireless Internet access coverage in a large area. A software module running on the on-street traffic control computer provides a link between a wireless router and the traffic control computer network.

The trend to utilize on-street traffic control computers to run software unrelated to traffic control has resulted in the involvement of software development firms not otherwise involved in the traffic controller industry.

The terms "software module" and "traffic control software" as used in the present specification therefore refer to any software that can run on a traffic control computer, whether or not that software is directly related to traffic control.

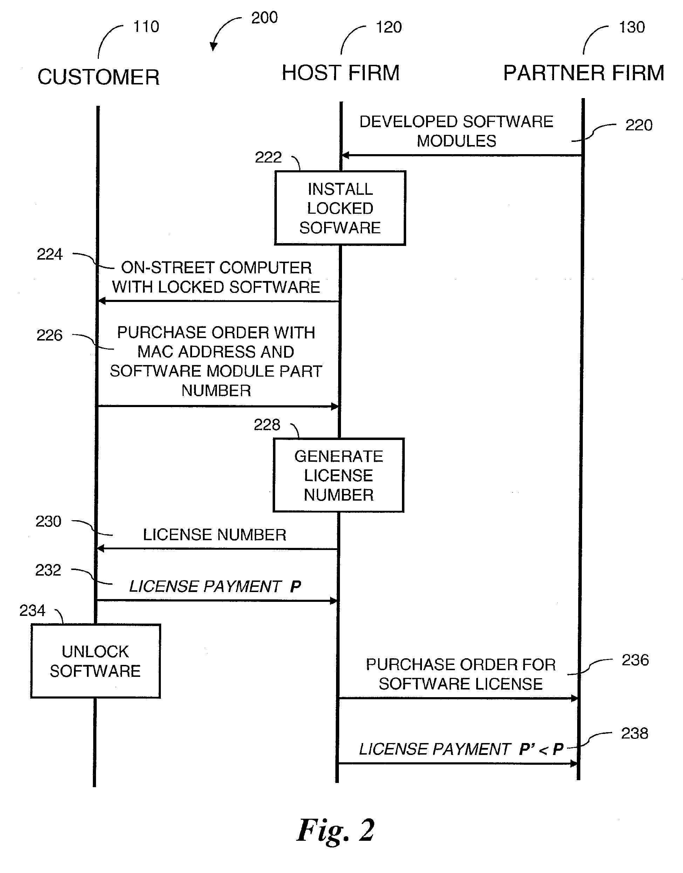

The schematic diagram 200 depicts transactions and steps conducted by and among the entities shown in the block diagram of FIG. 1. The transactions and steps shown in FIG. 2 are not necessarily shown in chronological order. Similar entities are numbered similarly in the figures.

In accordance with the present invention, object code for a complete set of traffic control software modules is transmitted (transaction 220) from the partner firm 130 to the host firm 120. The software is then preloaded by the host firm 120 at the factory (action 222) before the traffic control computer 112 is shipped (transaction 224) to the customer 110. As preloaded in the computer, each of the traffic control software modules is locked; i.e., unusable without a key. Optionally, the shipped traffic control computer may contain a minimally functional software module allowing elementary operation of the traffic control computer without a key.

In addition to the benefits provided by the present invention as described below, shipping the traffic control computer with a complete, preloaded software suite further motivates the customer to purchase additional software module licenses from the host firm. That is because the software is already loaded in the equipment, and need not be installed or checked for compatibility.

A customer 110 wishing to purchase a license to use one or more of the partner firm's software modules preloaded in the traffic control computer 112 generates a purchase order number for each module and transmits the order number(s) (transaction 226) to the host firm 120 through the customer interface 140 (FIG. 1). The customer interface 140 may be a network connection such as an Internet connection. Alternatively, the interface 140 may be a less formal interface between the customer and the host firm such as a combination of telephone, email and face-to-face communications.

The purchase order number generated by the customer includes a traffic control computer identifier that identifies the specific computer for which a license is desired. That identifier may be the media access control (MAC) address of that on-street computer.

The purchase order number also includes an identifier for the traffic control software module desired to be unlocked. That identifier may be a part number of the desired software application module, identifying the software product. Alternatively, the identifier may be a serial number identifying the particular instance of the module loaded on the particular traffic control computer.

The purchase order number is received by the host firm's order entry system. That system generates a unique license number (action 228), using the software module identifier and the traffic control computer identifier as two computational "seeds" in the calculation. The resulting license number is transmitted from the host firm 120 to the customer 110 (transaction 230). For example, the license number may be included in a normal order acknowledgement email to the customer.

The license number is used to unlock (action 234) the particular software application on the particular on-street computer. Package license numbers capable of unlocking multiple software modules or license numbers that are operable in multiple traffic control computers may be generated to meet marketing requirements.

The transactions between the customer and the host form also include a funds receiving utility 160 (FIG. 1) in which a license fee ***P*** is paid by the customer to the host firm.

A sales order entered into the host firm's accounting system generates a purchase order to the partner firm 130 for the software license (transaction 236). A payment ***P'*** is also made by the host firm to the partner firm (transaction 238). The payment ***P'*** provides the revenue stream and the financial incentive for each partner firm 130 to develop new products, and to market those products at the partner firms' own expense to public sector customers. Previously, such marketing was through a political process at public expense.

The purchase order and payment ***P'*** are transmitted from the host firm 120 to the software partner firm 130 through a partner firm interface 150 (FIG. 1). That interface may include the funds transmitting utility 170 for transmitting the payment ***P'.*** That utility may be an electronic funds transmission utility, or another billing and payment method as known in the art.

In a preferred embodiment of the invention, for each software module "turned on," the fee ***P*** collected by the host firm from the customer is larger than the fee ***P'*** collected by the partner firm from the host firm. The incremental dollar difference between the purchase orders ***P'*** to the partner firm, and the sales orders ***P*** from the end customer (i.e., ***P'-P***) is effectively a "host fee." The host fee is typically a small fraction of the license fee collected for the partner firms, and is certainly smaller than the partner firm's former cost of manufacturing and installation of specialized equipment. In one embodiment of the invention, the host fee is less than 10% of the partner firm software license payment. In another embodiment, that fee is less than 5% of the partner firm software license payment.

The host fee covers the cost incurred by the host firm to load the partner firm's software, and covers the cost incurred by the host firm for technical help to the partner firms to insure that the partner's software runs correctly on the host firm's equipment. The host fee furthermore provides financial incentive for the host firm to develop improved on-street computer equipment. Otherwise, the small additional manufacturing cost necessary to increase the power of an on-street computer by ten-fold certainly would be viewed as an unacceptable "cost increase" to the manufacturing-centric host firm. For example, a host firm would likely not enthusiastically develop a more powerful on-street computer unless the partner firm's application software required it, by offering income to the host firm in the form of the host fee.

Of course, other arrangements are possible, including equal license payments by the customer and the host firm (resulting in no "host fee") and a fee ***P'*** paid by the host firm to the partner firm in excess of the fee ***P*** paid by the customer (resulting in a premium paid by the host firm to the partner firm for each licensed instance of the software, for example, where the software is very popular and its preloading results in sales of the computers).

The partner firms' software may be locked by simple "weak encryption," meaning the encryption is just strong enough to prevent an infringement defendant from claiming that it accidentally enabled the partner firm's software. As noted in the Background of this application, severe penalties are now being imposed on copyright infringers. Those penalties do not depend on the type of algorithm broken by the perpetrator. In a preferred embodiment of the present invention, a locking algorithm is used that is legally and mathematically strong enough to avoid an argument that it was accidentally unlocked, while being weak enough to be computed (unlocked) quickly in real time by a small on-street computer.

The specific locking algorithm used in the present invention need not be kept secret. Instead, enforcement of the copyrights law is depended upon to protect the partner firms' intellectual property. In the field of traffic controllers and traffic control software, dependence on a strong encryption as a method for protection of electronic intellectual property is a flawed approach, because even strong encryption may eventually be broken. Only when security attacks are successful are the weaknesses of the product realized and corrected.

The better alternative is to assume that the entire design is known to the world, because, with a little effort, any design may be decompiled, reverse-engineered, and published. In a fully-disclosed and tested system according to the invention, security rests solely with the "lock and key" described above. There are no hidden flaws, back doors or trusted collaborators. As long as the key is at least mildly complex, routinely changed and monitored for assault, the rest of the system is safe, as it has been publicly scrutinized by experts (both good and evil), and the copyright protection is strictly enforced.

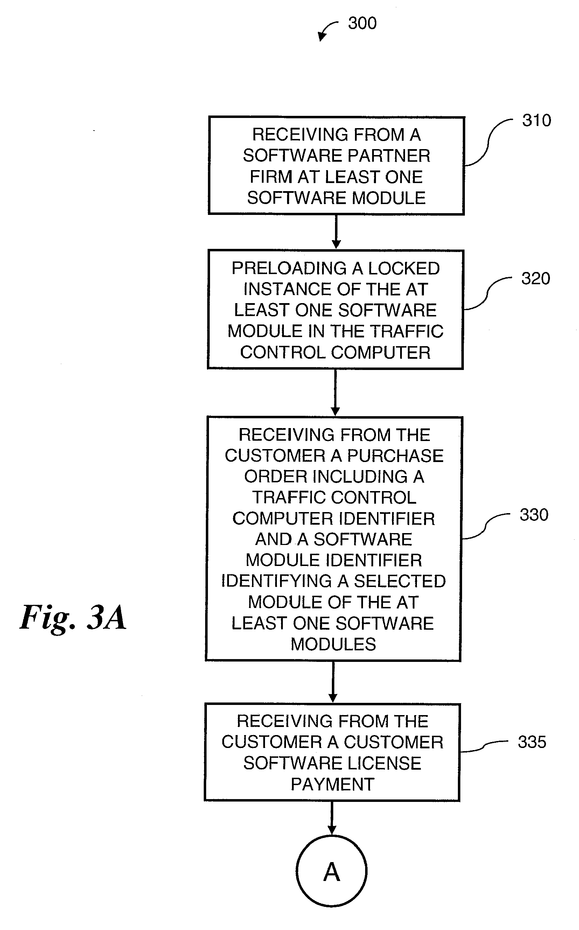

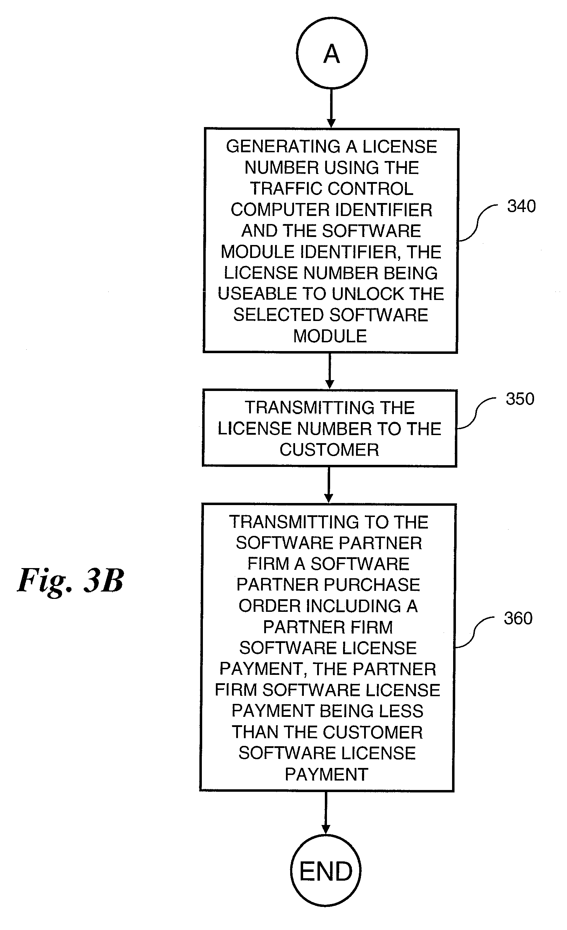

A method for deploying software in a traffic control computer for use by a customer, according to the invention, is shown as a flow chart 300 of FIGS. 3A & 3B. Initially, a software module is received (step 310) from a software partner firm. As noted above, the software may or may not be related to traffic control. The step of receiving the software module may be performed at the time of initial software delivery by the partner firm, or in periodic updates to the software as new versions are released.

A locked instance of the software module is preloaded (step 320) by the host firm onto the traffic control computer. The locking algorithm may be executed on the software module by the host firm, or the locking may be done before delivery of the software by the partner firm.

The host firm receives (step 330) from the customer a purchase order including a traffic control computer identifier and a software module identifier identifying a selected module of the at least one software modules. In a preferred embodiment, those identifiers are the MAC address of the computer and the part number of the software module, respectively. Also received from the customer (step 335) is the customer software license payment.

A license number is generated (step 340) by the host firm using the traffic control computer identifier and the software module identifier. The license number is useable to unlock the selected software module. The license number is transmitted to the customer (step 350).

A partner firm software license payment is transmitted (step 360) to the software partner firm. As described above, the partner firm software license payment is, in one embodiment, less than the customer software license payment.

In the system of the present invention, the software partner firms have no manufacturing expenses or inventory costs. The manufacturing costs that would otherwise have been incurred by the partner firms are now used in small part to pay the host fee and in large part to develop new innovative products.

The focused efficiency of the partner firms to develop applications, the focused efficiency of the host firm to manufacture and install equipment, and to enforce intellectual property rights, result in a successful business model for the private sector to supply innovative products to public-sector agencies at a low cost. The method and system of the present invention financially motivate the partner firms to focus on the development of software applications within their expertise, instead of the manufacture and installation of equipment, which becomes the focus of host firm. The host firm is fmancially driven to indirectly respond to the public-sector customer by providing an equipment infrastructure responsive to the needs of the software partner firms.

The foregoing Detailed Description is to be understood as being in every respect illustrative and exemplary, but not restrictive, and the scope of the invention disclosed herein is not to be determined from the Description of the Invention, but rather from the Claims as interpreted according to the full breadth permitted by the patent laws. For example, while the system and method of the invention are described with reference to traffic control computers, the invention may be applied to other types of computers, including general purpose computers. It is to be understood that the embodiments shown and described herein are only illustrative of the principles of the present invention and that various modifications may be implemented by those skilled in the art without departing from the scope and spirit of the invention.

## Claims

1. A method for deploying software in a traffic control computer for use by a customer, the method comprising the steps of:
receiving from a software partner firm at least one software module;
preloading a locked instance of the at least one software module in the traffic control computer;
receiving from the customer a purchase order including a traffic control computer identifier and a software module identifier identifying a selected module of the at least one software modules;
receiving from the customer a customer software license payment;
generating a license number using the traffic control computer identifier and the software module identifier, the license number being useable to unlock the selected software module;
transmitting the license number to the customer; and
transmitting to the software partner firm a partner firm software license payment, the partner firm software license payment being less than the customer software license payment.

2. The method of claim 1, wherein a difference between the partner firm software license payment and the customer software license payment is less than 10% of the partner firm software license payment.

3. The method of claim 1, wherein a difference between the partner firm software license payment and the customer software license payment is less than 5% of the partner firm software license payment.

4. The method of claim 1, wherein the traffic control computer identifier is a media access control (MAC) address of the traffic control computer.

5. The method of claim 1, wherein the software module identifier is a part number of the selected software module.

6. The method of claim 1, wherein the software module identifier is a serial number of the particular instance of the selected software module preloaded on the traffic control computer.

7. The method of claim 1, wherein the step of generating a license number using the traffic control computer identifier and the software module identifier, further comprises:
using the traffic control computer identifier and the software module identifier as computational seeds.

8. The method of claim 1, wherein the step of transmitting the license number to the customer, further comprises:
emailing the license number to the customer.

9. The method of claim 1, wherein the at least one software module performs at least one traffic control function.

10. The method of claim 1, wherein the at least one software module performs at least one function other than a traffic control function.

11. A host firm system for unlocking preloaded software modules in a traffic control computer under control of a customer, the system comprising:
a software partner firm interface for receiving software modules from a software partner firm;
a customer interface for receiving a purchase order including an identifier of the traffic control computer and a software module identifier identifying a selected module of software modules preloaded on the traffic control computer;
a funds receiving utility for receiving a customer software license payment from the customer;
a license number generator for generating a software license number using the traffic control computer identifier and the software module identifier, the license number being useable to unlock the selected software module; and
a funds transmitting utility for transmitting to the software partner firm a partner firm software license payment, the partner firm software license payment being less than the customer software license payment.

12. The system of claim 11, wherein a difference between the partner firm software license payment and the customer software license payment is less than 10% of the partner firm software license payment.

13. The system of claim 11, wherein a difference between the partner firm software license payment and the customer software license payment is less than 5% of the partner firm software license payment.

14. The system of claim 11, wherein the traffic control computer identifier is a media access control (MAC) address of the traffic control computer.

15. The system of claim 11, wherein the software module identifier is a part number of the selected software module.

16. The system of claim 11, wherein the software module identifier is a serial number of the particular instance of the selected software module preloaded on the traffic control computer.

17. The system of claim 11, wherein the customer interface is further configured for transmitting the license number to the customer.

18. The system of claim 17, wherein the customer interface includes an email interface for transmitting the license number.

19. The method of claim 11, wherein the software modules perform at least one traffic control function.

20. The method of claim 11, wherein the software modules perform at least one function other than a traffic control function.

21. A method for deploying software in a computer for use by a customer, the method comprising the steps of:
receiving from a software partner firm at least one software module;
preloading a locked instance of the at least one software module in the computer;
receiving from the customer a purchase order including a computer identifier and a software module identifier identifying a selected module of the at least one software modules;
receiving from the customer a customer software license payment;
generating a license number using the computer identifier and the software module identifier, the license number being useable to unlock the selected software module;
transmitting the license number to the customer; and
transmitting to the software partner firm a partner firm software license payment.

22. The method of claim 21, wherein the partner firm software license payment is less than the customer software license payment.

23. The method of claim 22, wherein a difference between the partner firm software license payment and the customer software license payment is less than 10% of the partner firm software license payment.

24. The method of claim 22, wherein a difference between the partner firm software license payment and the customer software license payment is less than 5% of the partner firm software license payment.

25. The method of claim 21, wherein the computer is an on-street traffic control computer.

26. The method of claim 25, wherein the at least one software module performs at least one traffic control function.

27. The method of claim 25, wherein the at least one software module performs at least one function other than a traffic control function.

28. The method of claim 21, wherein the computer identifier is a media access control (MAC) address of the computer.

29. The method of claim 21, wherein the software module identifier is a part number of the selected software module.

30. The method of claim 21, wherein the software module identifier is a serial number of the particular instance of the selected software module preloaded on the traffic control computer.

31. The method of claim 21, wherein the step of generating a license number using the computer identifier and the software module identifier, further comprises:
using the computer identifier and the software module identifier as computational seeds.
